# EUROPÄISCHE PATENTANMELDUNG

(11) **EP 2 394 875 A2**
(43) Veröffentlichungstag der Anmeldung: **14.12.2011**
(21) Anmeldenummer: 11004396.5
(22) Anmeldetag: 28.05.2011
(51) Int. Cl.: B60W 30/08, B60W 50/06, G01S 13/93, G01S 17/93

(54) **Verfahren zur Steuerung des Betriebs wenigstens eines umfelderfassenden Sensorsystems und Kraftfahrzeug**

(30) Priorität: 11.06.2010 DE 102010023540
(71) Anmelder: Audi AG, 85045 Ingolstadt (DE); Audi Electronics Venture GmbH, 85080 Gaimersheim (DE)
(72) Erfinder: Larice, Markus, 85123 Karlskron (DE); Dirndorfer, Tobias, 80799 München (DE); Keppeler, Norbert, 85354 Freising (DE)
(74) Vertreter: Thielmann, Frank

(57) **Zusammenfassung**

Verfahren zur Steuerung des Betriebs wenigstens eines umfelderfassenden Sensorsystems, umfassend wenigstens einen Sensor und/oder wenigstens ein Daten des Sensors aufbereitendes Auswertungsmodul, eines Kraftfahrzeugs, welches Sensorsystem wenigstens einen Teil der Eingangsdaten einer Eingangsdaten zu konkreten Steueraktionen des Kraftfahrzeugs auswertenden Funktion eines Fahrzeugsystems liefert, wobei abhängig von wenigstens einem im Rahmen der Funktion ermittelten Steuerungsparameter das Sensorsystem zwischen wenigstens zwei im Rahmen der Funktion genutzten Betriebsmodi umschaltbar ist.

## Beschreibung

Die Erfindung betrifft ein Verfahren zur Steuerung des Betriebs wenigstens eines umfelderfassenden Sensorsystems, umfassend wenigstens einen Sensor und/oder wenigstens ein Daten des Sensors aufbereitendes Auswertungsmodul, eines Kraftfahrzeugs, welches Sensorsystem wenigstens einen Teil der Eingangsdaten einer Eingangsdaten zu konkreten Steueraktionen des Kraftfahrzeugs auswertenden Funktion eines Fahrzeugsystems liefert, sowie ein zugehöriges Kraftfahrzeug.

Heutige Sensorsysteme, insbesondere umfelderfassende Sensorsysteme, umfassen neben dem wenigstens einen Sensor, beispielsweise einem Umfeldsensor, häufig auch ein Auswertungsmodul, das zur Aufbereitung der Rohdaten des Sensors für die sie nutzenden Fahrzeugsysteme im Sinne einer vorbereitenden Auswertung ausgebildet ist. Ein solches Auswertungsmodul kann beispielsweise als elektronische Komponente, insbesondere als ein Prozessor, sensornah realisiert werden. Für einen Umfeldsensor kann beispielsweise vorgesehen sein, dass seine Rohdaten intern bereits in eine Objektliste aufbereitet werden, die in Form einer Liste verschiedene detektierte Objekte und verschiedene Eigenschaften dieser Objekte enthalten kann. Dabei kann die Aufbereitung selbstverständlich auch das Ableiten weiterer Informationen aus den Rohdaten umfassen, beispielsweise im Sinne einer interpretierenden Bearbeitung der Rohdaten.

Diese so aufbereiteten Daten können, beispielsweise über ein Bussystem wie einen CAN-Bus, an andere Fahrzeugsysteme weitergegeben werden und dort von den einzelnen Funktionen besser verarbeitet werden. Unter einer Funktion wird vorliegend jede inhaltlich zusammengehörige Funktionalität verstanden, die Eingangsdaten, insbesondere auch von Sensorsystemen, auswertet und daraus Steueraktionen beziehungsweise Steuerbefehle generiert, die an andere Fahrzeugsysteme übermittelt werden. Beispielsweise weist ein Längsführungssystem eine Abstandshaltefunktion auf, die aus Eingangsdaten über ein vorausfahrendes Fahrzeug und einer Geschwindigkeitsinformation beispielsweise einen Steuerbefehl an das Bremssystem oder den Motor folgert, um den Abstand zu halten. Eine Funktion kann durch elektronische und/oder Softwarekomponenten, beispielsweise ein Programmpaket, realisiert werden.

Dabei werden Sensorsysteme meist mit einem festgelegten Satz von Betriebs- und Auswerteparametern betrieben, die jedoch nicht immer auf die speziellen Bedürfnisse der einzelnen Situationen abgestimmt sind. Insbesondere bezüglich der Frequenz bzw. Rate, mit der die Sensorsysteme Daten liefern, werden häufig Optimierungen auf den gesamten Funktionsumfang vorgenommen, die in manchen, beispielsweise in kritischen Situationen nicht die optimale Performance erlauben.

Dies sei am Beispiel eines vorausschauenden Sicherheitssystems näher erläutert, dessen hauptsächliche Funktion die Kollisionsüberwachung ist. Dabei werden Objekte im Umfeld des Kraftfahrzeugs über Sensorsysteme detektiert und es werden insbesondere die Positionen und Relativgeschwindigkeiten sowie Informationen über die Reaktionsmöglichkeiten des Kraftfahrzeugs berücksichtigt, um beispielsweise eine Kollisionswahrscheinlichkeit zu bestimmen und zur Ansteuerung verschiedener Sicherheitssysteme des Kraftfahrzeugs zu berücksichtigen. Besonders wichtig ist dabei das Verhalten bei einer unvermeidbaren Kollision, wenn beispielsweise eine Zeit bis zur Kollision (time to collision - TTC) ermittelt wird, welche dann wiederum das Auslösen von Sicherheitssystemen wie Airbags oder dergleichen mitbestimmt.

Die Datenraten der Umfeldsensorik, die ja auf die Erfassung großer Bereiche um das Kraftfahrzeug ausgelegt ist, sind nicht auf sehr kurze Zeitfenster ausgelegt, wie sie bei einer bevorstehenden Kollision für die sogenannte Crasherkennung optimal wären. Insbesondere ist, da normalerweise ja viele Daten übertragen werden müssen, die Datenübertragungsrate niedrig. Somit können wichtige Informationen im Falle einer Kollision nicht mit der gewünschten Genauigkeit und Häufigkeit ausgewertet werden, da die Sensorsysteme nicht auf eine Crasherkennung ausgelegt sind.

Der Erfindung liegt daher die Aufgabe zu Grunde, ein Verfahren anzugeben, mit dem eine bessere Gesamtausnutzung von Sensorsystemen in Kraftfahrzeugen ermöglicht wird und die zuvor genannten Nachteile behoben werden.

Zur Lösung dieser Aufgabe ist bei einem Verfahren der eingangs genannten Art erfindungsgemäß vorgesehen, dass abhängig von wenigstens einem im Rahmen der Funktion ermittelten Steuerungsparameter das Sensorsystem zwischen wenigstens zwei im Rahmen der Funktion genutzten Betriebsmodi umgeschaltet wird.

Die Erfindung schlägt also vor, im Rahmen einer einzigen Funktion eines Fahrzeugsystems, beispielsweise eines vorausschauenden Sicherheitssystems oder eines Fahrerassistenzsystems, verschiedene Arten vorzusehen, wenigstens ein von der entsprechenden Funktion genutztes Sensorsystem zu betreiben. Im Prinzip kann ein Betriebsmodus als ein vordefinierter Satz von wenigstens einem Betriebsparameter des Sensors und/oder wenigstens einem Auswerteparameter und/oder wenigstens einem Betriebsparameter einer dem Sensor zugeordneten Einrichtung, beispielsweise einer Ausleuchtungseinrichtung, verstanden werden. Der Steuerungsparameter wiederum wird im allgemeinen einen bestimmten Aspekt der aktuellen Situation des Kraftfahrzeugs wiedergeben, der bewirkt, dass in veränderter Form, beispielsweise häufiger und/oder anders aufbereitet vorliegende Eingangsdaten des Sensorsystems der Funktion zuträglicher wären und eine verbesserte Ausführung der Funktion erlauben. Mit anderen Worten gibt der Steuerungsparameter also eine Möglichkeit zur intern relevanten Situationsunterscheidung bezüglich der Funktion.

Auf diese Weise wird es also ermöglicht, Sensorsysteme so zu betreiben, dass die an die Funktion gelieferten Eingangsdaten verbessert den Anforderungen an eine hochqualitative Ausführung der Funktion genügen; die Möglichkeiten des Sensors bzw. Sensorsystems werden also weitgehender im Rahmen einer Funktion ausgenutzt. Das Sensorsystem wird also adaptiv so angepasst, dass eine optimierte Ressourcennutzung ermöglicht wird.

Es sei bereits an dieser Stelle angemerkt, dass die Betriebsmodi vordefiniert sein können, also beispielsweise verschiedene fest definierte Parametersätze für verschiedene Werte und/oder Wertebereiche des wenigstens einen Ansteuerungsparameters in einer Speichereinrichtung abgelegt sein können. Selbstverständlich kann jedoch auch vorgesehen sein, dass wenigstens ein Parameter, also ein Betriebs- oder Auswerteparameter, in Abhängigkeit des wenigstens eines Steuerungsparameters angepasst bzw. gewählt wird, so dass beispielsweise eine Kennlinie oder dergleichen verwendet werden kann.

Beispielsweise können Betriebs- und Auswerteparameter des Sensorsystems derart angepasst werden, dass abhängig von dem Steuerungsparameter die Abtastfrequenz des Sensors und/oder ein Ausleuchtungsbereich des Sensorsystems und/oder die Intensität einer Ausleuchtung und/oder der Erfassungsbereich des Sensors und/oder eine Zahl auszuwertender Objekte und/oder im Rahmen der Auswertung verwendete Filter und/oder eine Auswertungsgenauigkeit angepasst werden. Dies sei anhand einiger Beispiele nun näher erläutert.

So kann beispielweise ein Ansteuerungsparameter aufgrund eines von einem Lichtsensor, beispielsweise einem Infrarot-Lichtsensor, bestimmten Lichtspektrums bestimmt werden. Denn ein Sensorsystem der Umfeldsensorik hat unter freien Himmel mit anderen Herausforderungen zu kämpfen als beispielsweise innerhalb von Einhausungen (z. B. Parkgarage, Crashhalle, etc.). Unter Zuhilfenahme des Lichtsensors können solche unterschiedlichen Ausgangssituationen aber anhand des Lichtspektrums erkannt werden und das Sensorsystem kann auf die jeweiligen relevanten Umfeldgegebenheiten besser adaptiert werden, indem beispielsweise bekannte störende Nebeneffekte durch bereits im Sensorsystem angewendete entsprechende Filter ausgeblendet oder anders bewertet werden. Auch kann vorgesehen sein, beispielsweise bei aktiven optischen Sensoren, die Ausleuchtweite zum Beispiel in Form der Lichtmenge anzupassen. Die Funktion des Fahrzeugsystems erhält dann verbessert der Situation angepasst aufbereitete Eingangsdaten und kann verbessert durchgeführt werden.

Ähnlich lässt sich ein Ansteuerungsparameter beispielsweise aufgrund der Daten eines Regensensors ermitteln, um beispielsweise bei Umfeldsensorsystemen das gezielte Ausblenden von Regeneffekten und/oder durch Gischt erzeugten Geisterobjekten, beispielsweise bei Ultraschallsensoren, bereits im Sensorsystem zu erlauben.

Andere Beispiele umfassen beispielsweise einen Nahsicht- und einen Fernsichtbetriebsmodus eines Umfeldsensorsystems im Rahmen einer einzigen Funktion und dergleichen.

Allgemein kann also formuliert werden, dass vorgesehen sein kann, dass ein die aktuelle Fahrsituation beschreibender Steuerungsparameter verwendet wird. Auf diese Weise ist es also möglich, im Betrieb einer Funktion selber situativ eine Anpassung der Sensorcharakteristik zu erreichen, so dass das Sensorsystem in der aktuellen Fahrsituation geeignetere Daten liefert, insbesondere also optimal der Fahrsituation angepasst betrieben wird.

Es sei an dieser Stelle im übrigen angemerkt, dass bei gemeinsamer Nutzung eines Sensorsystems durch mehrere Funktionen mögliche Konflikte durch eine einfache Priorisierung aufgelöst werden können, so dass beispielsweise Sicherheitsfunktionen eine höhere Priorität erhalten als Komfortfunktionen.

Besonders vorteilhaft lässt sich das erfindungsgemäße Verfahren auch in kollisionsbezogenen Funktionen eines vorausschauenden Sicherheitssystems realisieren. So kann vorgesehen sein, dass als Steuerungsparameter ein eine mögliche Kollision betreffender Parameter, insbesondere ein die Unvermeidbarkeit einer Kollision anzeigender Parameter und/oder ein die Überschreitung eines Schwellwerts durch die Kollisionswahrscheinlichkeit anzeigender Parameter, verwendet wird. Gerade dann, wenn eine Kollision unvermeidlich ist, ist eine besonders genaue Bestimmung bestimmter Größen, beispielsweise der Zeit bis zur Kollision oder der Kollisionsgeschwindigkeit, erforderlich, um beispielsweise den Auslösezeitpunkt von Sicherheitssystemen und/oder ihre Parametrierung auf dem sicherst möglichen Weg zu erlauben.

Zweckmäßigerweise kann dann vorgesehen sein, dass in einem bei einer unvermeidbaren Kollision und/oder bei Überschreitung des Schwellwerts durch die Kollisionswahrscheinlichkeit aktiven Betriebsmodus die Frequenz, in der das Sensorsystem Daten liefert, erhöht wird, insbesondere verdoppelt oder vervierfacht. Es wird also letztlich, wenn eine Kollision nicht mehr vermeidbar ist, insgesamt die Datenrate des Sensorsystems erhöht, beispielsweise von 25 Hz auf 50 oder 100 Hz, was durch verschiedene konkrete Maßnahmen erreicht werden kann. So kann vorgesehen sein, dass in einem bei einer unvermeidbaren Kollision aktiven Betriebsmodus der Sensor mit einer höheren Abtastfrequenz betrieben und/oder ausgelesen wird und/oder eine Anzahl ausgewerteter sensierter Objekte reduziert wird.

Zunächst kann der Sensor selbst, bei einem aktiven Sensorsystem ggf. noch eine Sendeeinrichtung wie eine Ausleuchteinrichtung, in einer höheren Frequenz Rohdaten liefern, was auch zu einer höheren Datenrate des Sensorsystems führt. Konkret heißt das, dass Betriebsparameter angepasst werden, im Falle eines Festkörperdetektors beispielweise die Integrationszeit erniedrigt oder im Falle einer Ausleuchteinrichtung, beispielsweise einem aktiven Infrarot-Sensor zugeordnet, die Länge bzw. Frequenz der ausgesendeten Lichtpulse erniedrigt bzw. erhöht.

Möglich ist aber auch, insbesondere zusätzlich, dass die durch das Auswertemodul vorgenommene Aufbereitung beschleunigt wird, beispielsweise, indem in einem bei einer unvermeidbaren Kollision und/oder bei Überschreitung des Schwellwerts durch die Kollisionswahrscheinlichkeit aktiven Betriebsmodus eine Anzahl ausgewerteter sensierter Objekte reduziert wird. Werden detektierte Objekte in einer Objektliste zusammengefasst, kann das Maximum der darin enthaltenen Objekte reduziert werden, beispielsweise von acht auf vier, so dass z. B. nur noch das Kollisionsobjekt (auch als CU-Objekt, "crash unavoidable"-Objekt bezeichnet) und drei weitere, ähnlich nahe Objekte betrachtet werden müssen. Damit kann die Frequenz, in der Daten geliefert werden, weiter erhöht werden.

Es sei an dieser Stelle noch angemerkt, dass auch eine Reduzierung des Erfassungsbereichs (beispielsweise auch durch eine Verringerung der von einer Ausleuchteinrichtung ausgesandten Lichtmenge) eine schnellere Datenfrequenz begünstigen kann, da, z. B. durch einen reduzierten Erfassungsbereich, weniger Daten verarbeitet werden müssen.

Durch die Erhöhung der Frequenz, in der das Sensorsystem Daten zur Verfügung stellt, werden eine Vielzahl von Vorteilen erreicht. Zum einen hängt der durch Prädiktionsvorgänge der Funktion verursachte relative Fehler von der Abtastrate, also der Frequenz, mit der neue Daten vorliegen, ab, da sich die Prädiktionszeiträume verändern. Insbesondere bei niedrigen Relativgeschwindigkeiten des Kraftfahrzeugs und des Kollisionsobjekts, beispielsweise bei bis zu 25km/h Relativgeschwindigkeit, zeigt sich ein sehr deutlicher Effekt. Dies sei anhand eines Beispiels näher erläutert. Beträgt die Relativgeschwindigkeit bei einer bevorstehenden Kollision eines LKW mit einem PKW 15 km/h und ist die Prämisse für die Prädiktion maximales Beschleunigen/Bremsen, so ergibt sich bei einer Datenfrequenz von 25 Hz ein Fehlerbereich von etwa 16% bezogen auf die Relativgeschwindigkeit, welche sich quadratisch auf die kinetische Energie auswirkt, die dann einen Toleranzbereich von etwa -18% bis +14% aufweist. Bei 100 Hz ist der Fehlerbereich nur etwa 4%.

Eine erhöhte Datenfrequenz/Abtastrate ermöglicht auch eine genauere Bestimmung der Zeit bis zur Kollision (Kollisionsbeginn). Die höhere Messwertanzahl vor der Kollision ermöglicht auch eine genauere Prognose der Relativgeschwindigkeit und der Kollisionsüberdeckung. Die höhere Validierungsgüte ermöglicht eine stärkere Beeinflussung des Auslöseverhaltens. Insbesondere sei noch darauf hingewiesen, dass selbstverständlich auch der durch Messungenauigkeit verursachte Fehler durch eine größere Anzahl von Messwerten aufgrund der Statistik reduziert wird, insbesondere können geeignete statistische Verfahren eingesetzt werden.

Schließlich lassen sich durch die erhöhte Abtastrate Ressourcen sparen, denn ein sehr aufwendiges und ressourcenintensives Berechnungsverfahren für die Prädiktion der Kollisionsparameter kann vermieden werden, beispielsweise eine Trajektorienberechnung oder die Verwendung großer Puffer bei der Speicherung von Historienwerten.

In weiterer Ausgestaltung des erfindungsgemäßen Verfahrens kann vorgesehen sein, in einem bei einer unvermeidbaren Kollision und/oder bei Überschreitung des Schwellwerts durch die Kollisionswahrscheinlichkeit aktiven Betriebsmodus das einen Umfeldsensor umfassende Sensorsystem in einem Nahbereichsmodus betrieben wird. Bei der Betrachtung einer bevorstehenden Kollision ist nämlich letztlich nur der Nahbereich relevant, so dass die Datengewinnung und -aufbereitung dahingehend optimiert werden kann. Konkret kann vorgesehen sein, in einem bei einer unvermeidbaren Kollision und/oder bei Überschreitung des Schwellwerts durch die Kollisionswahrscheinlichkeit aktiven Betriebsmodus der Sensor mit einem kleineren Erfassungsbereich betrieben wird und/oder eine Ausleuchtungsreichweite des Sensors oder einer dem Sensor zugeordneten Ausleuchtvorrichtung reduziert wird und/oder ein für den Nahbereich optimierter Objektfilter, insbesondere ein Kalman-Filter, zur Auswertung verwendet wird und/oder ein Objektfilter im Hinblick auf den Nahbereich angepasst wird.

Folglich kann beispielsweise für die verbliebenen Objekte im Nahbereich die Ausleuchtung bei einem aktiven System bzw. der Erfassungsbereich reduziert werden, beispielsweise von 30m auf 10-15m. Durch Reduzierung der Ausleuchtweite können beispielsweise unangenehme Nebeneffekte im Nahbereich wie Halo-Effekte vermieden werden, so dass die Datenqualität verbessert wird.

Auch durch eine Anpassung der Objektfilter, beispielsweise eines Kalman-Filters, speziell für den Nahbereich ist eine ggf. weitere Verbesserung der Datenqualität möglich. Solche Objektfilter sind bekannt und werden insbesondere bei bildgebenden Sensorsystemen eingesetzt, wenn über mehrere aufeinanderfolgende Datenaufnahmen hinweg Eigenschaften von Objekten (repräsentiert beispielsweise als Pixelgruppen) ermittelt werden sollen. Ein Beispiel ist hier auch ein Mittelwertfilter. Werden diese in dem Betriebsmodus für den Nahbereich optimiert, so kann beispielsweise die Objektbreite, die Objektposition und die Objektgeschwindigkeit genauer bestimmt werden.

Wie bereits erwähnt, werden üblicherweise verschiedene Kollisionsparameter durch die Funktion ermittelt, woraus verschiedene Steuerbefehle, insbesondere für Sicherheitssysteme, ggf. aber auch Fahreingriffe folgen. Beispielsweise können aus Daten des Sensorsystems ein Kollisionszeitpunkt und/oder wenigstens ein Auslösezeitpunkt für ein Sicherheitssystem des Kraftfahrzeugs ermittelt werden.

Gerade für den Fall des vorausschauenden Sicherheitssystems ergibt sich dabei insgesamt ein hoher Nutzen für den Fahrer des Kraftfahrzeugs. Die Auslösestrategie der Sicherheitssysteme wird optimiert und die Crasherkennung wird verbessert. Zudem erniedrigen sich die Reparaturkosten, wenn Kollisionen mit geringerer Crashschwere erzielt werden. Es ergibt sich ferner ein höheres Schutzpotential bei schweren Folgekollisionen und ein reduziertes Verletzungsrisiko durch Fehlauslösungen des Airbags bei Kollisionen mit geringer Crashschwere. Dies sind nur einige der sich ergebenden mannigfaltigen Vorteile.

Neben dem Verfahren betrifft die Erfindung auch ein Kraftfahrzeug, umfassend ein Sensorsystem und Daten des Sensorsystems nutzendes Fahrzeugsystem, ausgebildet zur Durchführung des erfindungsgemäßen Verfahrens. Sämtliche Ausführungen bezüglich des Verfahrens lassen sich analog auf das erfindungsgemäße Kraftfahrzeug übertragen, so dass auch damit die genannten Vorteile erreicht werden. Insbesondere kann das die Funktion ausführende Fahrzeugsystem ein vorausschauendes Sicherheitssystem sein, wobei die Erfindung aber grundsätzlich auf alle das Umfeld erfassenden Systeme anwendbar ist.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug, und
- Fig. 2: einen Ablaufplan des erfindungsgemäßen Verfahrens.

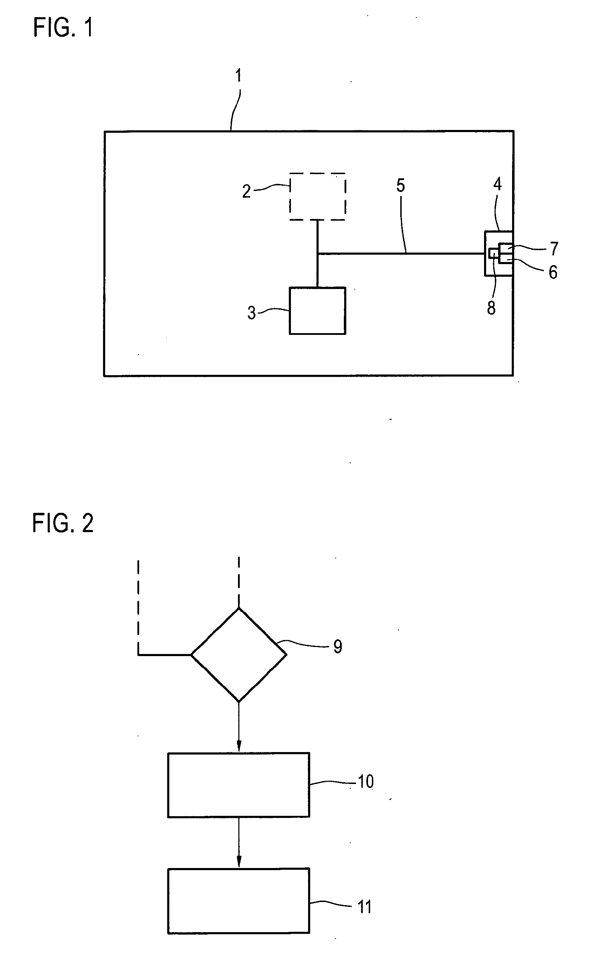

Fig. 1 zeigt die Prinzipskizze eines erfindungsgemäßen Kraftfahrzeugs 1. Es umfasst neben anderen Fahrzeugsystemen, die bei 2 allgemein angedeutet sind, ein vorausschauendes Sicherheitssystem 3, welches als Funktion eine Kollisionsüberwachung aufweist, die bei drohender bzw. unvermeidbarer Kollision andere Sicherheitssysteme und Fahrzeugsysteme 2 des Kraftfahrzeugs 1, beispielsweise die Bremsen, Gurtsysteme, Airbags, eine anstellbare Motorhaube und dergleichen, ansteuert.

Um Informationen über das Umfeld des Kraftfahrzeugs 1 zu gewinnen, erhält die Funktion Eingangsdaten von Sensorsystemen, wobei ein Sensorsystem 4 hier genauer betrachtet werden soll. Zur Kommunikation mit dem Sensorsystem 4 und den anderen Fahrzeugsystemen ist ein Kommunikationsbus, hier ein CAN-Bus 5, vorgesehen.

Das Sensorsystem 4, hier ein Umfeldsensorsystem, ist ein aktives optisches Sensorsystem 4, welches einen eine Vielzahl von Detektorpixeln umfassenden Infrarotsensor 6 und eine Ausleuchteinrichtung 7, die in die selbe Richtung gerichtet ist, umfasst. Über ein Funktionsmodul 8, das hier als ein Prozessor ausgebildet ist, werden die Rohdaten des Sensors 6 aufbereitet und als Objektlisten über den CAN-Bus 5 den Fahrzeugsystemen 2, 3 zur Verfügung gestellt.

Der Infrarotsensor 6 misst mittels seiner Pixel dabei die Entfernung (Laufzeitmessung), die Reflektivität und nimmt letztlich auch eine Art Bild auf, aus dem Formen der Objekte gefolgert werden können. Durch das jeweils verwendete Sensorprinzip können auch Zusatzinformationen wie z. B. 3D-Erfassung, Reflektionsverhalten und dergleichen zur Verfügung stehen. Eine Objektliste wird dann erstellt, indem letztlich Gruppen von Pixeln als Objekte identifiziert werden und über ihren zeitlichen Verlauf betrachtet werden, wobei verschiedene Objektfilter eingesetzt werden, um Rauschen der Messwerte und dergleichen Effekte auszugleichen, beispielsweise Kalman-Filter. So können zu einem Objekt dann für jedes Objekt die Objektbreite, die Objektposition und die Objektgeschwindigkeit als aufbereitete Daten in der Objektliste zur Verfügung gestellt werden.

Mithin existieren für den Betrieb des Sensorsystems 4 einige Parameter, die die Art und Qualität der aufbereiteten Daten bestimmen. Als Betriebsparameter des Sensors 6 (und der Ausleuchteinrichtung 7, die dem Sensor 6 hier unmittelbar zugeordnet ist) ergeben sich beispielsweise die auszuschickende Lichtmenge, die Länge der Lichtpulse, die Frequenz der Lichtpulse, die Integrationszeit für die Detektorpixel bei der Aufnahme der Messdaten und die Abtastfrequenz. Selbstverständlich sind auch weitere grundsätzlich beeinflussbare Betriebsparameter denkbar. Aber auch die Auswertung durch das Funktionsmodul 8 weist grundsätzlich Auswerteparameter auf, beispielsweise durch die Art der verwendeten Objektfilter oder sonstige Auswerteparameter.

Die Objektliste als aufbereitete Daten steht nun über den CAN-Bus 5 als wenigstens ein Teil der Eingangsdaten der Funktion "Kollisionsüberwachung" des vorausschauenden Sicherheitssystems 3 zur Verfügung. Die Funktion überprüft die Eingangsdaten letztlich auf eine Kollisionswahrscheinlichkeit und einzuleitende Maßnahmen und kann dabei als ein Softwarepaket oder auch umfassend elektronische Komponenten realisiert sein. Es werden Eingangsdaten letztendlich in Betriebsparameter bzw. Steuerbefehle an andere Fahrzeugsysteme 2 aufbereitet.

Im normalen Betrieb der Kollisionsüberwachung sind alle Objekte auch in einem weiteren Bereich um das Kraftfahrzeug relevant. Ihre Relativgeschwindigkeiten können dabei mit den technischen Möglichkeiten des Kraftfahrzeugs 1 (physikalischer Grenzbereich) verglichen werden, um eine Kollisionswahrscheinlichkeit festzustellen, wie allgemein bekannt ist und hier nicht näher dargelegt werden muss. Daher wird üblicherweise das Sensorsystem 4 so konfiguriert, dass es für den Weitbereich Daten generieren kann, durch eine weite Ausleuchtweite, viele verarbeitete Objekte und eine daraus folgende eher niedrige Frequenz, beispielsweise 25 Hz, mit der die aufbereiteten Daten den Fahrzeugsystemen 2, 3 zur Verfügung gestellt werden.

Das erfindungsgemäße Verfahren in dieser Ausführungsform stellt jedoch zwei beide innerhalb der Funktion Kollisionsüberwachung zu nutzende Betriebsmodi des Sensorsystems 4 zur Verfügung, nämlich einen schnellen Nahbereichsmodus und einen langsameren Weitbereichsmodus, welcher die Standardeinstellung wie oben beschrieben bildet. Dies wird vorliegend anhand eines die Unvermeidbarkeit einer Kollision beschreibenden Ansteuerungsparameters, der in der Funktion intern bestimmt wird, gesteuert. Selbstverständlich können auch andere Ansteuerungsparameter berücksichtigt werden, beispielsweise die Zeit bis zum Beginn einer Kollision.

Wird nämlich in einem Schritt 9, Fig. 2, festgestellt, dass eine Kollision unvermeidbar ist, beispielsweise in 300-600ms auftreten wird, so wird in einem Schritt 10 das Sensorsystem 4 für den Betrieb der Funktion Kollisionsüberwachung in einen anderen Betriebsmodus überführt, nämlich den Nahbereichsmodus. Hierzu werden folgende Betriebs- und Auswerteparameter des Sensorsystems 4 verändert. Die aufbereiteten Daten werden als Ergebnis nur in höherer Frequenz und speziell auf den Nahbereich hin optimiert, also genauer, zur Verfügung gestellt.

Die Auswertung der Objektlisten wird von beispielsweise größer oder gleich acht Objekten auf vier Objekte reduziert, vorliegend auf das Kollisionsobjekt (CU-Objekt) und weitere drei Objekte mit einem ähnlichen Abstand zum Kraftfahrzeug 1. Damit kann bereits die Framerate der Datenübertragung auf 50 Hz mindestens verdoppelt werden.

Für die verbleibenden Objekte im interessierenden Nahbereich wird die Ausleuchtung durch die Ausleuchteinrichtung 7 reduziert, beispielsweise von 30 Metern auf 10 bis 15 Meter. Hierdurch wird nur noch der wirklich relevante Bereich betrachtet und ungewollte Nebeneffekte im Nahbereich, wie beispielsweise Halo-Effekte, werden deutlich reduziert. Die Datenqualität für den Nahbereich erhöht sich. Hierdurch kann im übrigen den Datenfrequenz weiter erhöht werden, so dass die Objektlisten beispielweise mit 75 bis 100 Hz übertragen werden können.

Es sei an dieser Stelle noch angemerkt, dass analog auch die Integrationszeiten am Sensor 6 und dessen Abtastfrequenz erniedrigt bzw. erhöht werden können, was eine weitere Erhöhung der Datenfrequenz bewirken kann.

Weiterhin erfolgt eine Anpassung der Objektfilter speziell für den Nahbereich, um so eine weitere Verbesserung der Datenqualität zu ermöglichen. Auf diese Weise wird die Präzision bei der Bestimmung von Objektbreite, Objektposition und Objektgeschwindigkeit erhöht. Tatsächlich wird, wie bereits erwähnt, der relative Fehler hierdurch deutlich erniedrigt.

Insbesondere die Erhöhung der Datenfrequenz hat einen positiven Einfluss auf die weiter durchgeführte Funktion der Funktion in Schritt 11, die Steuerbefehle, Betriebsparameter und Aktivierungszeitpunkte für verschiedene weitere Sicherheitssysteme bestimmt, anhand von Zwischenparametern wie der Zeit bis zu der Kollision, der Kollisionsüberdeckung, der Kollisionsgeschwindigkeit und dergleichen. Diese Zwischenparameter können im Nahbereichsmodus des Sensorsystems 4 genauer bestimmt werden. Die höhere Messwertzahl ermöglicht die Reduzierung von Ungenauigkeiten durch statistische Verfahren.

Insgesamt ergibt sich also eine höhere Prädiktionsgüte und daraus folgend eine verbesserte Ansteuerung weiterer Sicherheits- und Fahrzeugsysteme. Die Crashschwere kann ggf. reduziert werden und das Schutzpotential wird erhöht.

## Patentansprüche

1. Verfahren zur Steuerung des Betriebs wenigstens eines umfelderfassenden Sensorsystems, umfassend wenigstens einen Sensor und/oder wenigstens ein Daten des Sensors aufbereitendes Auswertungsmodul, eines Kraftfahrzeugs, welches Sensorsystem wenigstens einen Teil der Eingangsdaten einer Eingangsdaten zu konkreten Steueraktionen des Kraftfahrzeugs auswertenden Funktion eines Fahrzeugsystems liefert,
**dadurch gekennzeichnet,**
**dass** abhängig von wenigstens einem im Rahmen der Funktion ermittelten Steuerungsparameter das Sensorsystem zwischen wenigstens zwei im Rahmen der Funktion genutzten Betriebsmodi umgeschaltet wird.

2. Verfahren nach Anspruch 1, **dadurch gekennzeichnet, dass** abhängig von dem Steuerungsparameter die Abtastfrequenz des Sensors und/oder ein Ausleuchtungsbereich des Sensorsystems und/oder die Intensität einer Ausleuchtung und/oder der Erfassungsbereich des Sensors und/oder eine Zahl auszuwertender Objekte und/oder im Rahmen der Auswertung verwendete Filter und/oder eine Auswertungsgenauigkeit angepasst werden.

3. Verfahren nach Anspruch 1 oder 2, **dadurch gekennzeichnet, dass** ein die aktuelle Fahrsituation beschreibender Steuerungsparameter verwendet wird.

4. Verfahren nach einem der vorangehenden Ansprüche, **dadurch gekennzeichnet, dass** als Steuerungsparameter ein eine mögliche Kollision betreffender Parameter, insbesondere ein die Unvermeidbarkeit einer Kollision anzeigender Parameter und/oder ein die Überschreitung eines Schwellwerts durch die Kollisionswahrscheinlichkeit anzeigender Parameter, verwendet wird.

5. Verfahren nach Anspruch 4, **dadurch gekennzeichnet, dass** in einem bei einer unvermeidbaren Kollision und/oder bei Überschreitung des Schwellwerts durch die Kollisionswahrscheinlichkeit aktiven Betriebsmodus die Frequenz, in der das Sensorsystem Daten liefert, erhöht wird, insbesondere verdoppelt oder vervierfacht.

6. Verfahren nach Anspruch 5, **dadurch gekennzeichnet, dass** in einem bei einer unvermeidbaren Kollision und/oder bei Überschreitung des Schwellwerts durch die Kollisionswahrscheinlichkeit aktiven Betriebsmodus der Sensor mit einer höheren Abtastfrequenz betrieben und/oder ausgelesen wird und/oder eine Anzahl ausgewerteter sensierter Objekte reduziert wird.

7. Verfahren nach einem der Ansprüche 4 bis 6, **dadurch gekennzeichnet, dass** in einem bei einer unvermeidbaren Kollision und/oder bei Überschreitung des Schwellwerts durch die Kollisionswahrscheinlichkeit aktiven Betriebsmodus das einen Umfeldsensor umfassende Sensorsystem in einem Nahbereichsmodus betrieben wird.

8. Verfahren nach Anspruch 7, **dadurch gekennzeichnet, dass** in einem bei einer unvermeidbaren Kollision und/oder bei Überschreitung des Schwellwerts durch die Kollisionswahrscheinlichkeit aktiven Betriebsmodus der Sensor mit einem kleineren Erfassungsbereich betrieben wird und/oder eine Ausleuchtungsreichweite des Sensors oder einer dem Sensor zugeordneten Ausleuchtvorrichtung reduziert wird und/oder ein für den Nahbereich optimierter Objektfilter, insbesondere ein Kalman-Filter, zur Auswertung verwendet wird und/oder ein Objektfilter im Hinblick auf den Nahbereich angepasst wird.

9. Verfahren nach einem der Ansprüche 4 bis 8, **dadurch gekennzeichnet, dass** aus Daten des Sensorsystems ein Kollisionszeitpunkt und/oder wenigstens ein Auslösezeitpunkt für ein Sicherheitssystem des Kraftfahrzeugs ermittelt werden.

10. Kraftfahrzeug (1), umfassend ein Sensorsystem (4) und Daten des Sensorsystems (4) nutzendes Fahrzeugsystem (3), ausgebildet zur Durchführung eines Verfahrens nach einem der vorangehenden Ansprüche.
